## Europäisches Patentamt

(19) **European Patent Office**

**Office européen des brevets**

(11) Veröffentlichungsnummer: **0 038 405**

**A1**

(12) # EUROPÄISCHE PATENTANMELDUNG

(21) Anmeldenummer: **81101111.3**

(22) Anmeldetag: **17.02.81**

(51) Int. Cl.³: **B 23 B 51/00**

(30) Priorität: **15.04.80 DE 3014388**

(43) Veröffentlichungstag der Anmeldung:
**28.10.81 Patentblatt 81/43**

(84) Benannte Vertragsstaaten:
**AT BE CH FR GB IT LI NL SE**

(71) Anmelder: **artur fischer forschung**
**Weinhalde 14 - 18**
**D-7244 Waldachtal 3 (Tumlingen)(DE)**

(72) Erfinder: **Fischer, Artur, Dr. h. c.**
**Weinhalde 34**
**D-7244 Waldachtal 3/Tumlingen(DE)**

(54) Zur Herstellung von Bohrlöchern mit Hinterschneidungen bestimmte Bohreinheit.

㊗ Die Erfindung betrifft eine Bohreinheit bestehend aus Bohrschaft (1) und mit diesem verbundenen Bohrplättchen (2) welches außer der Stirnschneide den Bohrschaft radial überragende Seitenschneiden (4,5) aufweist, wobei der Bohrschaft einen dem das Bohrplättchen umschreibenden Durchmesser entsprechenden kugelförmigen Bund (6) besitzt. Zur Herstellung von Bohrlöchern mit Hinterschneidungen in vorbestimmter Tiefe ist die Bohreinheit mit einem an der Oberfläche des mit dem Bohrloch versehenen Gegenstandes zur Anlage kommenden, Boden (13) und Deckel (16) aufweisenden Anschlaggehäuse (10) versehen, das über eine am Bohrschaft festsetzbare, die zur Herstellung der Hinterschneidung erforderliche Schwenkbewegung ermöglichende Arretierungshülse (8) axial fixiert ist.

./...

EP 0 038 405 A1

EP 1418

Zur Herstellung von Bohrlöchern mit Hinterschneidungen bestimmte Bohreinheit

Die Erfindung betrifft eine zur Herstellung von Bohrlöchern
mit Hinterschneidungen bestimmte Bohreinheit aus Bohrschaft
und mit diesem verbundenen Bohrplättchen, welches außer der
Stirnschneide den Bohrschaft radial überragende Seitenschneiden aufweist, wobei der Bohrschaft einen dem das Bohrplättchen umschreibenden Durchmesser entsprechenden kugelförmigen
Bund besitzt.

Eine derartige Bohreinheit ist aus der DE-OS 23 49 998 bekannt. Mit dieser Bohreinheit wird zunächst das Bohrloch mit
der gewünschten Tiefe gebohrt. Sodann werden mit dem Bohrer
Schwenkbewegungen ausgeführt, bei denen der kugelförmige
Bund durch sein Anliegen an der Bohrlochwandung das Schwenklager bildet. Zur Tiefenbegrenzung ist es bekannt, den Bohrschaft mit einem Anschlag zu versehen, der an der Mauerwerksoberfläche bzw. einer auf der Mauerwerksoberfläche aufliegenden Anschlagplatte zur Anlage kommt. Durch einen derartigen
Anschlag wird verhindert, daß das Bohrloch zu tief gebohrt
wird. Nicht auszuschließen mit der bekannten Anschlagvorrichtung ist jedoch eine zu geringe Bohrlochtiefe, dann nämlich,
wenn zwar die Anschlagplatte an der Wandoberfläche anliegt,
der am Bohrschaft angeordnete Anschlagbund jedoch nicht an
der Anschlagplatte anstößt. Diese Gefahr besteht vor allem
dann, wenn die Anschlagplatte zur Bildung einer Bohrglocke
mit einem Gehäuse versehen ist, die eine Sichtkontrolle verhindert. Auch ohne Anlage ist mit dem kugelförmigen Bund am
Bohrschaft eine Hinterschneidung möglich, da für die Herstellung der Hinterschneidung keine Vorschubkraft sondern lediglich eine Schwenkkraft erforderlich ist. Somit besteht die Ge-

EP 1418

fahr, daß die Hinterschneidung nicht in der für optimale Haltekräfte des einzusetzenden Befestigungselementes erforderlichen Bohrlochtiefe angeordnet ist.

Der Erfindung liegt daher die Aufgabe zugrunde, eine Bohreinheit zu schaffen, bei der sichergestellt ist, daß die Hinterschneidung des Bohrloches in der richtigen Bohrlochtiefe hergestellt wird.

Erfindungsgemäß wird dies dadurch erreicht, daß die Bohreinheit mit einem an der Oberfläche des mit dem Bohrloch versehenen Gegenstandes zur Anlage kommenden, Boden und Deckel aufweisenden Anschlaggehäuse versehen ist, das über eine am Bohrschaft festsetzbare, die zur Herstellung der Hinterschneidung erforderliche Schwenkbewegung ermöglichende Arretierungshülse axial fixiert ist.

Durch die axiale Fixierung des Anschlaggehäuses am Bohrschaft macht das Anschlaggehäuse die Vorschubbewegung des Bohrers während der Herstellung des Bohrloches mit. Eine vorzeitige Anlage des Anschlaggehäuses an der Mauerwerksoberfläche vor Erreichung der richtigen Bohrlochtiefe ist nicht mehr möglich. Damit besteht in jeder Phase des Bohrvorganges eine Kontrolle der erreichten Bohrlochtiefe. Sobald das Anschlaggehäuse an der Mauerwerksoberfläche zur Anlage kommt, ist auch die richtige Bohrlochtiefe erreicht. Somit ist sichergestellt, daß die Hinterschneidung des Bohrloches an der gewünschten Stelle ausgeführt wird.

In einer weiteren Ausgestaltung der Erfindung kann die Arretierungshülse eine konkave und eine konvexe Anschlagfläche aufweisen, die auf entsprechend angepaßten Gegenflächen des Bodens bzw. des Deckels des Anschlaggehäuses gleiten. Durch

EP 1418

diese Maßnahme wird das Ausschwenken des Bohrschaftes in dem Anschlaggehäuse erleichtert, sowie die Reibungsverhältnisse bei der Herstellung der Hinterschneidung verbessert.

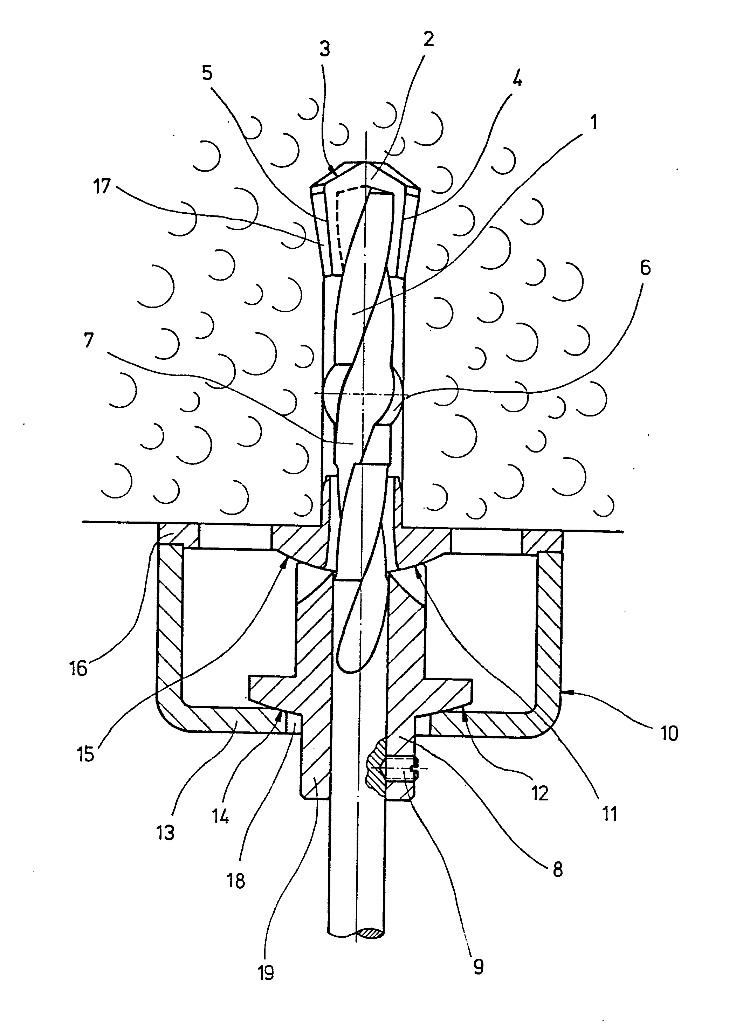

In der Zeichnung ist ein Ausführungsbeispiel der Erfindung dargestellt.

Die Bohreinheit besteht aus dem Bohrschaft 1 und dem mit diesem verbundenen Bohrplättchen 2. Dieses weist außer der Stirnschneide 3 noch radial über den Bohrschaft hinausragende Seitenschneiden 4, 5 auf. Desweiteren besitzt der Bohrschaft 1 einen kugelförmigen Bund 6, der einstückig mit dem Bohrschaft 1 hergestellt sein kann. Seine Lage in axialer Richtung hängt von der gewünschten Bohrlochtiefe ebenso ab wie von der Gesamtlänge des Bohrers sowie von der Größe der angestrebten Hinterschneidung. Für die verschiedenen Verhältnisse können also entsprechende Ausgestaltungen der Bohreinheit hergerichtet werden. Der Bohrschaft 1 weist schließlich noch ein oder mehrere, das Bohrmehl abführende und den Schaft schraubenlienienförmig umwindende Nuten 7 auf.

In einem die Bohrlochtiefe bestimmenden Abstand von dem kugelförmigen Bund 6 befindet sich die Arretierungshülse 8, die bspw. über eine Stiftschraube 9 am Bohrschaft festgesetzt sein kann. Über die Arretierungshülse 8 wird das Anschlaggehäuse 10 axial am Bohrschaft 1 fixiert. Um dies zu erreichen, entspricht der Abstand zwischen der konkav und der konvex ausgebildeten Anschlagfläche 11, 12 der Arretierungshülse 8 dem Abstand zwischen der im Boden 13 des Anschlaggehäuses 10 angeordneten Mulde 14 und der Erhebung 15 des Deckels 16 des Anschlaggehäuses. Die Radien der konkaven bzw. konvexen Anschlagflächen 11, 12 der Arretierungshülse 8 sowie der Gegenflächen des Anschlaggehäuses sind derart aufeinander abgestimmt, daß die

EP 1418

Schwenkbewegung zur Herstellung der Hinterschneidung 17 möglich ist. Ferner wird durch diese Ausbildung die Reibung während des Schwenk- und Rührvorganges vermindert. Die Durchtrittsöffnung 18 im Boden 13 des Anschlaggehäuses 10 ist auf den maximal erlaubten Durchmesser abgestimmt, den der Hülsenschaft 19 der Arretierungshülse 8 beim Schwenken an dieser Stelle beschreiben darf. Um das Anschlaggehäuse 10 von der Arretierungshülse 8 abnehmen zu können, ist der Deckel 16 des Anschlaggehäuses durch lösbare Verbindungsmittel wie Schrauben oder dgl. abnehmbar.

artur fischer forschung

7244 Tumlingen / Waldachtal    den 10. April 1980

Ju/Woe

- 1 -

EP 1418

P a t e n t a n s p r ü c h e

1.  Zur Herstellung von Bohrlöchern mit Hinterschneidungen bestimmte Bohreinheit aus Bohrschaft und mit diesem verbundenen Bohrplättchen, welches außer der Stirnschneide den Bohrschaft radial überragende Seitenschneiden aufweist, wobei der Bohrschaft einen dem das Bohrplättchen umschreibenden Durchmesser entsprechenden kugelförmigen Bund besitzt, dadurch gekennzeichnet, daß die Bohreinheit mit einem an der Oberfläche des mit dem Bohrloch versehenen Gegenstandes zur Anlage kommenden, Boden und Deckel aufweisenden Anschlaggehäuse versehen ist, das über eine am Bohrschaft festsetzbare, die zur Herstellung der Hinterschneidung erforderliche Schwenkbewegung ermöglichende Arretierungshülse axial fixiert ist.

0038405

EP 1418

2.   Bohreinheit nach Anspruch 1, dadurch gekennzeichnet, daß die Arretierungshülse eine konkave und eine konvexe Anschlagfläche aufweist, die auf entsprechend angepaßten Gegenflächen des Bodens bzw. des Deckels des Anschlaggehäuses gleiten.

Europäisches
Patentamt

**EUROPÄISCHER RECHERCHENBERICHT**

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | B 23 B 51/00 |
| A | <u>DE - A - 2 657 000</u> (FISCHER) | 1 | | |
| A | <u>DE - A - 2 603 431</u> (FISCHER) | 1 | | |
| A | <u>GB - A - 2 005 572</u> (FISCHER) | 1 | | |
| | & DE - A - 2 746 029 | | | |
| A | <u>US - A - 4 154 311</u> (FISCHER) | 1 | | |
| | & DE - A - 2 539 521 | | | |
| | & DE - A - 2 547 412 | | | |
| | & DE - A - 2 544 468 | | | |
| | & DE - A - 2 549 057 | | | |

----

RECHERCHIERTE SACHGEBIETE (Int Cl.⁴)

B 23 B 51/00

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-07-1981 | BOGAERT |

EPA form 1503.1   06.78